(19) Europäisches Patentamt

European Patent Office

Office européen des brevets

(11) **EP 1 163 120 B1**

(12) **FASCICULE DE BREVET EUROPEEN**

(45) Date de publication et mention
de la délivrance du brevet:
**22.01.2003 Bulletin 2003/04**

(51) Int Cl.⁷: $B60C\ 9/26$, B60C 9/22,
B60C 9/20

(21) Numéro de dépôt: **00905072.5**

(22) Date de dépôt: **17.02.2000**

(86) Numéro de dépôt international:
**PCT/EP00/01318**

(87) Numéro de publication internationale:
**WO 00/054993 (21.09.2000 Gazette 2000/38)**

(54) **ARMATURE DE SOMMET DE PNEUMATIQUE RADIAL**

VERSTÄRKUNGSGÜRTEL FÜR RADIALEN REIFEN

RADIAL TYRE CROWN REINFORCEMENT

(84) Etats contractants désignés:
**DE ES FR GB IT**

(30) Priorité: **17.03.1999 FR 9903415**

(43) Date de publication de la demande:
**19.12.2001 Bulletin 2001/51**

(73) Titulaires:
• **Sociéte de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeurs:
• **ROYER, Thierry
F-63670 La Roche Blanche (FR)**
• **SUAREZ, Fernando
F-63200 Menetrol (FR)**

(74) Mandataire: **Diernaz, Christian
Michelin & Cie
Service SGD/LG/PI-LAD
63040 Clermont-Ferrand Cedex 09 (FR)**

(56) Documents cités:
EP-A- 0 850 787          EP-A- 0 887 208
US-A- 5 772 810

**Description**

L'invention concerne un pneumatique, destiné à porter de lourdes charges et gonflé à très haute pression, supérieure à 12 bars, tel que par exemple un pneumatique d'avion.

Un pneumatique, répondant aux critères ci-dessus et exploité par la demanderesse, est depuis de longue date composé d'une armature de carcasse radiale, formée d'une ou plusieurs nappes d'éléments de renforcement textiles, nappes généralement divisées en deux groupes : un premier groupe dit de nappes axialement intérieures, qui sont ancrées dans chaque bourrelet à au moins une tringle par enroulement autour de ladite tringle, en allant de l'intérieur à l'extérieur pour former des retournements de nappes ; et un deuxième groupe dit de nappes axialement extérieures, dont les extrémités radialement intérieures sont généralement disposées dans chaque bourrelet sous la tringle. Ladite armature de carcasse radiale est surmontée radialement d'une armature de sommet formée de plusieurs couches d'éléments de renforcement textiles inclinés par rapport à la direction circonférentielle d'un certain angle α. De manière à éviter les extrémités libres de nappes de sommet, les dites couches sont obtenues par enroulement autour d'une forme, cylindrique ou bombée, ou d'une ébauche d'armature de carcasse, d'une bandelette d'au moins un élément de renforcement textile en allant d'un bord à l'autre de la couche en formant l'angle désiré avec la plan équatorial.

Les éléments textiles couramment utilisés sont de polyamide aliphatique, qui présentent des caractéristiques de résistance à la tension assez médiocres, d'où l'emploi de nombreuses nappes. Comme pour de nombreux pneumatiques, l'utilisation de polyamide aromatique ou autre matériau similaire comme matériau de renforcement d'armature de sommet peut s'avérer intéressante en pneumatique pour avion, du fait des propriétés dudit matériau. L'emploi d'un tel matériau n'est cependant pas aisé et présente de nombreuses difficultés. Il est par exemple pratiquement impossible de l'utiliser dans le cadre d'une armature de sommet telle que décrite ci-dessus et obtenue par enroulement en zigzag d'une bandelette : les courbures prises par la bandelette, et donc par les éléments de renforcement en bord de couche, confèrent aux dits éléments des tensions et compressions très importantes, qui, combinées au fait que le polyamide aromatique présente des résistances aux dites contraintes qui se dégradent avec la température, annihilent tous les avantages du polyamide aromatique.

Une armature de sommet, avec nappes dont les bords sont repliés sur eux-mêmes, est aussi guère envisageable du fait des courbures et d'une adhésion au caoutchouc inférieure à celle d'un polyamide aliphatique.

Afin d'améliorer l'endurance de l'armature de sommet d'un pneumatique pour avion, la demande EP 0 850 787 A1 de la demanderesse correspondant au préambule de la revendication 1, décrit une armature comprenant d'une part des nappes dites "trancanées" à angle, d'autre part des nappes dites "trancanées" à O°, et en outre une couche intercalaire de découplage entre les dites nappes "trancanées", couche intercalaire pouvant être formée de deux nappes à bords coupés et formées d'éléments textiles croisés.

L'invention a pour but de permettre l'utilisation de polyamide aromatique en tant que matériau des éléments de renforcement principaux d'une armature de sommet, en adaptant l'architecture de ladite armature au matériau.

Le pneumatique d'avion, conforme à l'invention, comprenant une armature de carcasse radiale surmontée radialement à l'extérieur d'une armature de sommet et d'une bande de roulement, ladite armature de sommet étant composée :

a)-d'au moins une nappe d'éléments de renforcement textiles orientés circonférentiellement,

b)-d'au moins deux nappes à extrémités libres d'éléments de renforcement textiles, parallèles entre eux dans chaque nappe et croisés d'une nappe à la suivante en faisant avec la direction circonférentielle un angle α, compris entre 5° et 35°, et

c)-radialement à l'extérieur d'un ensemble d'au moins deux couches d'éléments de renforcement textiles orientés par rapport à la direction circonférentielle avec un angle β, compris entre 0° et 35°, et les dites deux couches étant obtenues par enroulement d'une bandelette, formée d'un moins un élément enrobé de mélange caoutchouteux, en allant d'un bord à l'autre bord des dites couches, caractérisé en ce que :

d)-le module sécant d'extension d'un élément orienté circonférentiellement de la (des) nappe(s) est au moins égal à 200 cN/tex,

e)-le module sécant d'extension d'un élément des nappes à extrémités libres est au moins égal à 200 cN/tex,

f)-le module sécant d'extension d'un élément des couches de l'ensemble est au plus égal à 200 cN/tex, l'ensemble des dites couches d'éléments textiles, obtenues par enroulement d'une bandelette en allant d'un bord à l'autre, ayant une largeur axiale $L_1$ supérieure à la largeur L de bande de roulement, alors que les largeurs des nappes formées d'éléments textiles à haut module, au moins égal à 200 cN/tex, sont inférieures à ladite largeur L de bande de roulement.

Il faut entendre par largeur de la bande de roulement la largeur, mesurée dans le plan radial de l'axe de la roue équipée, de la surface de contact entre le sol et le pneumatique monté sur sa jante de service, gonflé à la pression recommandé et portant sa charge normalisée.

Il faut entendre par éléments orientés circonférentiellement des éléments faisant avec la direction circonférentielle des angles pouvant être compris entre 0 ° et 10°.

Le module sécant d'extension $M_a$ d'un élément de renforcement est calculé pour les assemblages selon la relation :

$$M_a = F/\varepsilon \ . \ 1/T_i$$

avec F : force à laquelle est soumis l'assemblage pour un allongement relatif de 4%,

$\varepsilon$ : étant l'allongement relatif égal à 4%,

$T_i$ : titre exprimé en Tex de l'assemblage.

Un élément dont le module sécant est supérieur à 200 cN/tex est dit élément à haut module.

De manière préférentielle, la (les) nappe(s) d'éléments circonférentiels est(sont) directement située (s) sur l'armature de carcasse, et est(sont) obtenues par enroulement hélicoïdal d'une bandelette formée d'au moins un élément de renforcement de polyamide aromatique, ledit élément étant enrobé de mélange caoutchouteux adapté.

Les nappes formées d'éléments orientés avec l'angle $\alpha$, radialement au dessus de la(des) nappe(s) d'éléments circonférentiels, sont aussi préférentiellement formées de câbles en polyamide aromatique et ont des largeurs axiales différentes entre elles mais supérieures à la (aux) largeur(s) des dites nappes d'éléments circonférentiels tout en restant inférieures à la largeur de la bande de roulement.

L'ensemble des couches des éléments textiles, à module au plus égal à 200 cN/tex, peut être formé de câbles de polyamide aliphatique, orientés par rapport à la direction circonférentielle avec un angle $\beta$, ou de câbles dits hybrides, par exemple câbles formés de deux fils en polyamide aromatique et un fil en polyamide aliphatique, orientés de la même manière. Ledit ensemble aura préférentiellement une largeur axiale telle que les bords dudit ensemble soient couplés à l'armature de carcasse sur une largeur développée au moins égale à 10% de la ladite largeur axiale. Il faut entendre par bord couplé à l'armature de carcasse un bord en contact sur une certaine longueur avec ladite armature et séparé de ladite armature d'une épaisseur de caoutchouc égale à la somme des épaisseurs respectivement supérieure et inférieure des couches de calandrage de la dernière nappe d'armature de carcasse et la couche de l'ensemble en contact avec ladite dernière nappe. La variante ci-dessus permet une amélioration nette de l'endurance de l'armature de sommet au point de vue séparations inter-nappes, ainsi qu'une vitesse plus élevée, tout en permettant une élévation de la pression d'éclatement du pneumatique, ainsi qu'une une meilleure uniformité dudit pneumatique, en particulier du point de vue cyclique, ce qui minimise les usures anormales de la bande de roulement.

Comme connu en soi, et bien que dans le cas de petites dimensions l'ensemble des couches des éléments de renforcement de module au plus égal à 200 cN/tex puisse avantageusement remplir la fonction de couches de protection, l'armature de sommet ainsi revendiquée sera avantageusement complétée par au moins une nappe de protection formée d'éléments métalliques ondulés dans le plan de la nappe, ladite nappe étant localisée radialement à l'extérieur de l'ensemble des couches de câbles en polyamide aliphatique.

Les caractéristiques de l'invention seront mieux comprises à l'aide du dessin annexé à la description qui suit, dessin sur lequel :

- la figure 1 montre, vu en section méridienne un pneumatique pour avion conforme à l'invention,

- la figure 2 montre une variante préférentielle dudit pneumatique.

L'exemple décrit est celui d'un pneumatique de dimension normalisée 29 x 7.7 R 15 (normes de la Tire and Rim Association). L'armature de carcasse (1) est formée de trois nappes (1A à 1C) de câbles textiles radiaux. Il faut entendre par câbles radiaux des câbles faisant avec la direction circonférentielle du pneumatique des angles pouvant être compris dans l'intervalle 90° ± 10°. Parmi ces trois nappes, deux nappes (1A, 1B) axialement intérieures sont enroulées dans chaque bourrelet (B) autour d'une tringle (2) ayant, dans le cas étudié, une section transversale circulaire et étant enrobée d'une couche (20) de mélange caoutchouteux à fort module d'élasticité en tension, en allant de l'intérieur à l'extérieur du pneumatique P pour former des retournements (10A, 10B).

La section de la tringle (2) est surmontée radialement à l'extérieur par un profilé ou bourrage (12) de mélange élastomérique ayant sensiblement la forme d'un triangle dont le sommet A, radialement le plus éloigné de l'axe de rotation du pneumatique, est situé à une distance D de la droite XX', d'une part parallèle audit axe de rotation et d'autre part passant par le centre géométrique O du cercle circonscrit à la section transversale de la tringle (2), cercle qui est, dans le cas décrit, confondu avec la section elle-même.

Les retournements (10A, 10B) des nappes de carcasse intérieures (1A, 1B) ont leurs extrémités distantes radialement de la droite XX' de quantités supérieures, dans le cas étudié, à la distance D.

Il en est de même de l'extrémité radiale du brin axialement intérieur (110) de la languette (11), composée de câbles textiles radiaux identiques aux câbles des nappes de carcasse (mais qui peuvent être différents). Quant à l'extrémité radiale du brin axialement extérieur (111) de la languette intérieure (11), elle est séparée de la droite XX' par une distance radiale inférieure à la distance D.

La nappe de carcasse (1C) dite extérieure recouvre axialement à l'extérieur les retournements (10A, 10B) des nappes de carcasse (1A) et (1B) intérieures. La nappe (1C) est enroulée autour de la tringle (2) sur une portion ou arc circulaire correspondant à un angle au centre du cercle circonscrit à la tringle (2) au plus égal à 180°, de sorte que l'extrémité de cette nappe (1C) soit radialement située au-dessous de la droite XX' de référence.

Le bourrelet B de pneumatique est complété, comme connu en soi, par les mélanges de flanc (5) et de protection de bourrelet (6) ; alors qu'une couche intérieure (7) forme la paroi intérieure du pneumatique.

Ladite armature de carcasse (1) est surmontée radialement d'une armature de sommet (3) de câbles textiles. Cette armature de sommet (3) est formée radialement de l'intérieur à l'extérieur

a) d'une binappe (30) composée de deux nappes (300) et (301) de câbles textiles 330 x 2 en polyamide aromatique disposés circonférentiellement, chaque nappe étant obtenue par l'enroulement hélicoïdal, sur l'ébauche d'armature de carcasse (1), d'un câble enrobé de caoutchouc, et les largeurs respectives des dites deux nappes (300) et (301) étant de 95 mm et 85 mm, inférieures à la largeur L de la bande de roulement (4) mesurée comme décrit ci-dessus et égale à 130 mm ;

b) radialement au dessus d'un binappe (31) composé de deux nappes (310) et (311) coupées ou à extrémités libres, chacune des dites nappes (310) et (311) étant formée de câbles textiles 167 x 3 en polyamide aromatique, les dits câbles étant parallèles entre eux dans chaque nappe et croisés d'une nappe à la suivante en faisant avec la direction circonférentielle un angle α égal à 24°, lesdites nappes (310) et (311) présentant une épaisseur totale de 3,0 mm, et ayant des largeurs, d'une part inégales, et d'autre part telles qu'elles recouvrent axialement le binappe (30) radialement au dessous, tout en restant inférieures à la largeur L de la bande de roulement (4) ;

c) radialement à l'extérieur, d'un ensemble (32) composée de deux couches à angle, obtenues par l'enroulement d'une bandelette de 8 câbles textiles en polyamide aliphatique en allant d'un bord à l'autre de l'ensemble (32) en faisant un angle β de 10° avec la direction circonférentielle, ledit angle étant relié physiquement d'une part au nombre de périodes de formation de l'ensemble (32),et d'autre part à la largeur développée dudit ensemble très supérieure à la largeur L de bande de roulement puisqu'égale à 190 mm.

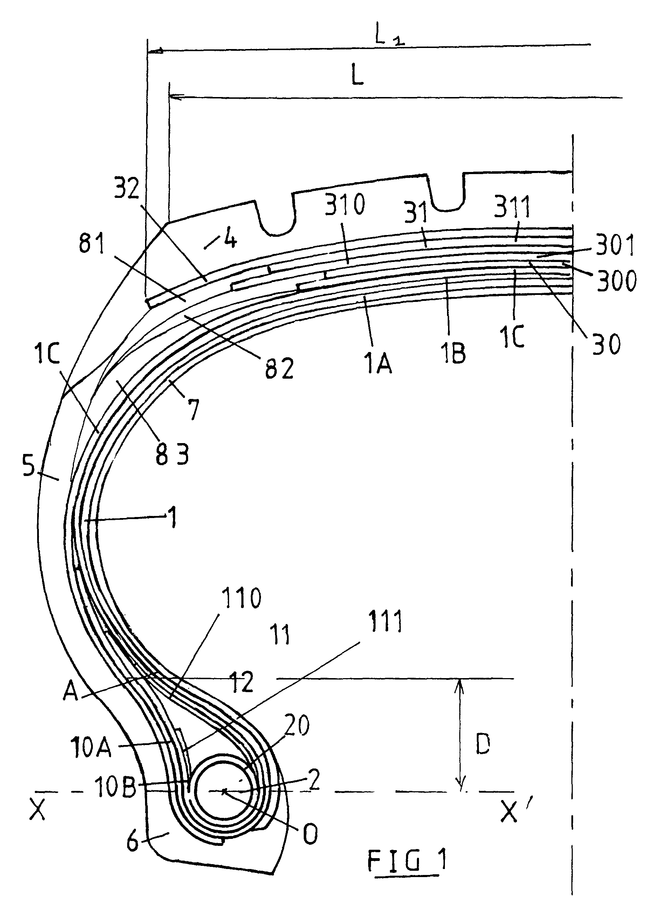

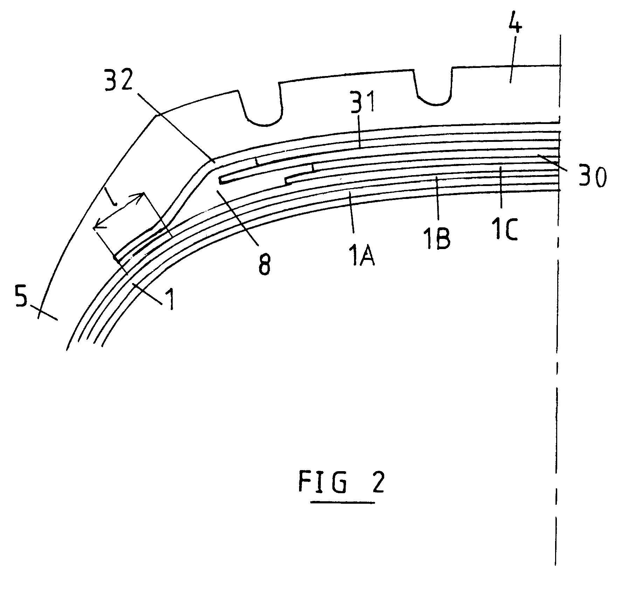

Alors que les bords de l'ensemble (32) reposent radialement, dans le pneumatique montré sur la figure 1, sur un complexe de mélanges caoutchouteux tels que les gommes (81) prolongeant axialement le binappe (31), les profilés (82) séparant le binappe (31) du binappe (30) et prolongeant ledit binappe (30) et les profilés (83) séparant l'armature de carcasse (1) de l'armature de sommet (3), les dits bords sont, dans l'exemple de pneumatique montré sur la figure 2, en contact direct, sur une certaine longueur développée 1, au moins égale à 20 mm et dans le cas décrit égale à 30 mm, avec l'armature de carcasse (1), l'épaisseur de caoutchouc séparant les câbles de la couche radialement inférieure de l'ensemble (32) des câbles de la nappe de carcasse (1C) étant la somme de l'épaisseur de la couche de calandrage qui recouvre intérieurement les câbles de la couche (32) et de l'épaisseur de la couche de calandrage qui recouvre extérieurement la dernière nappe de carcasse (1C). Des gommes de bordure et des profilés de gomme, formant un ensemble (8), comblent l'espace ainsi créé entre l'armature de carcasse (1) et l'ensemble (32).

## Revendications

1. Pneumatique d'avion, comprenant une armature de carcasse radiale (1) surmontée radialement à l'extérieur d'une armature de sommet (3) et d'une bande de roulement (4), ladite armature de sommet (3) étant composée :

a) d'au moins une nappe (300, 301) d'éléments de renforcement textiles orientés circonférentiellement,

b) d'au moins deux nappes (310, 311) à extrémités libres d'éléments de renforcement textiles, parallèles entre eux dans chaque nappe et croisés d'une nappe à la suivante en faisant avec la direction circonférentielle un angle α, compris entre 5° et 35°, et

c) radialement à l'extérieur d'un ensemble (32) d'au moins deux couches d'éléments de renforcement textiles orientés par rapport à la direction circonférentielle avec un angle β, compris entre 0° et 35°, et les dites deux couches étant obtenues par enroulement d'une bandelette, formée d'un moins un élément enrobé de mélange caoutchouteux, en allant d'un bord à l'autre bord des dites couches, **caractérisé en ce que** :

d) le module sécant d'extension d'un élément orienté circonférentiellement de la (des) nappe (s) d'éléments de renforcement textiles (300, 301) est au moins égal à 200 cN/tex,

e) le module sécant d'extension d'un élément des nappes (310, 311) à extrémités libres est au moins égal à 200 cN/tex, et

f) le module sécant d'extension d'un élément des couches de l'ensemble (32) est au plus égal à 200 cN/tex, l'ensemble (32) des dites couches d'éléments textiles, obtenues par enroulement d'une bandelette en allant d'un bord à l'autre, ayant une largeur axiale $L_1$ supérieure à la largeur L de bande de roulement (4), alors que les largeurs des nappes d'éléments de renforcement textiles (300, 301) et à extrémités libres (310, 311) formées d'éléments textiles à haut module, au moins égal à 200 cN/tex, sont inférieures à ladite largeur L de bande de roulement (4),

**2.** Pneumatique selon la revendication 1, **caractérisé en ce que** les couches d'éléments textiles, dont le module sécant d'extension $M_a$ d'un élément est au moins égal à 200 cN/tex, sont des couches d'éléments en polyamide aromatique.

**3.** Pneumatique selon l'une des revendications 1 ou 2, **caractérisé en ce que** les couches d'éléments textiles, dont le module sécant $M_a$ est au plus égal à 200 cN/tex et obtenues par enroulement en allant d'un bord à l'autre, sont formées de câbles en polyamide aliphatique.

**4.** Pneumatique selon l'une des revendications 1 à 3, **caractérisé en ce que** la (les) nappe(s) (300, 301) d'éléments circonférentiels est(sont) directement située(s) radialement sur l'armature de carcasse (1).

**5.** Pneumatique selon la revendication 4, **caractérisé en ce que** la (les) nappe(s) (300, 301) d'éléments circonférentiels est(sont) obtenues par enroulement hélicoïdal d'une bandelette formée d'au moins un élément de renforcement de polyamide aromatique, ledit élément étant enrobé de mélange caoutchouteux adapté.

**6.** Pneumatique selon l'une des revendications 1 à 4, **caractérisé en ce que** les nappes formées (310, 311) d'éléments orientés avec l'angle $\alpha$, radialement au dessus de la(des) nappe(s) (300, 301) d'éléments circonférentiels, ont des largeurs axiales différentes entre elles mais supérieures à la (aux) largeur(s) des dites nappes (300, 301) d'éléments circonférentiels tout en restant inférieures à la largeur L de la bande de roulement (4).

**7.** Pneumatique selon l'une des revendications 2 à 4, **caractérisé en ce que** l'ensemble (32) des couches d'éléments, dont le module est au plus égal à 200 cN/tex et orientés par rapport à la direction circonférentielle avec un angle $\beta$, a une largeur axiale $L_1$, telle que les bords dudit ensemble soient couplés à l'armature de carcasse (1) sur une longueur développée l au moins égale à 20 mm.

**Patentansprüche**

**1.** Flugzeug-Luftreifen mit einer radialen Karkassenbewehrung (1), über der radial außen eine Scheitelbewehrung (3) und eine Lauffläche (4) angeordnet sind, wobei die Scheitelbewehrung (3) zusammengesetzt ist aus:

a) mindestens einer Lage (300, 301) aus textilen Verstärkungselementen, die in Umfangsrichtung ausgerichtet sind,
b) mindestens zwei Lagen (310, 311) mit freien Enden aus textilen Verstärkungselementen, die in jeder Lage zueinander parallel liegen und sich von einer Lage zur nächsten kreuzen, indem sie mit der Umfangsrichtung einen Winkel $\alpha$ bilden, der zwischen 5° und 35° liegt, und
c) radial außen einer Einheit (32) aus mindestens zwei Schichten von textilen Verstärkungselementen, die in bezug auf die Umfangsrichtung mit einem Winkel $\beta$ ausgerichtet sind, der zwischen 0° und 35° liegt, und wobei die beiden Schichten erhalten werden durch Aufrollen eines Wulstbands, das aus mindestens einem mit einer Kautschukmischung umhüllten Element besteht, von einem Rand der Schichten zum anderen,
**dadurch gekennzeichnet, daß**
d) der Ausdehnungs-Sekansmodul eines in Umfangsrichtung ausgerichteten Elements der Lage(n) von textilen Verstärkungselementen (300, 301) mindestens gleich 200 cN/tex ist,
e) der Ausdehnungs-Sekansmodul eines Elements der Lagen (310, 311) mit freien Enden mindestens gleich 200 cN/tex ist,
f) der Ausdehnungs-Sekansmodul eines Elements der Schichten der Einheit (32) höchstens gleich 200 cN/tex ist, wobei die Einheit (32) der Schichten aus textilen Elementen, die durch Aufrollen eines Wulstbands von einem Rand zum anderen erhalten werden, eine axiale Breite $L_1$ aufweist, die größer ist als die Breite L der Lauffläche (4), während die Breiten der Lagen von textilen Verstärkungselementen (300, 301) und mit freien Enden (310, 311), die aus textilen Elementen mit hohem Modul mindestens gleich 200 cN/tex geformt sind, kleiner sind als die Breite L der Lauffläche (4).

**2.** Luftreifen nach Anspruch 1, **dadurch gekennzeichnet, daß** die Schichten von textilen Elemen-

ten, deren Ausdehnungs-Sekansmodul $M_a$ eines Elements mindestens gleich 200 cN/tex ist, Schichten von Elementen aus aromatischem Polyamid sind.

3. Luftreifen nach einem der Ansprüche 1 oder 2, **dadurch gekennzeichnet, daß** die Schichten von textilen Elementen, deren Sekansmodul $M_a$ höchstens gleich 200 cN/tex ist und die durch Aufrollen von einem Rand zum anderen erhalten werden, aus Seilen aus aliphatischem Polyamid gebildet werden.

4. Luftreifen nach einem der Ansprüche 1 bis 3, **dadurch gekennzeichnet, daß** die Lage(n) (300, 301) von Umfangselementen direkt radial auf der Karkassenbewehrung (1) angeordnet ist (sind).

5. Luftreifen nach Anspruch 4, **dadurch gekennzeichnet, daß** die Lage(n) (300, 301) von Umfangselementen durch spiralförmiges Aufrollen eines Wulstbands, das von mindestens einem Verstärkungselement aus aromatischem Polyamid gebildet wird, erhalten wird (werden), wobei das Element von einer angepaßten Kautschukmischung umhüllt wird.

6. Luftreifen nach einem der Ansprüche 1 bis 4, **dadurch gekennzeichnet, daß** die Lagen (310, 311), die von mit dem Winkel $\alpha$ ausgerichteten Elementen radial über der (den) Lage(n) (300, 301) von Umfangselementen geformt werden, untereinander unterschiedliche axiale Breiten haben, die aber größer sind als die Breite(n) der Lagen (300, 301) von Umfangselementen, wobei sie aber kleiner als die Breite der Lauffläche (4) bleiben.

7. Luftreifen nach einem der Ansprüche 2 bis 4, **dadurch gekennzeichnet, daß** die Einheit (32) der Schichten von Elementen, deren Modul höchstens gleich 200 cN/tex ist, und die in bezug auf die Umfangsrichtung mit einem Winkel $\beta$ ausgerichtet sind, eine solche axiale Breite $L_1$ hat, daß die Ränder der Einheit über eine entwickelte Länge I mindestens gleich 20 mm mit der Karkassenbewehrung (1) gekoppelt sind.

## Claims

1. An aircraft tyre, comprising a radial carcass reinforcement (1) surmounted radially to the outside by a crown reinforcement (3) and a tread (4), said crown reinforcement (3) being composed:

   a) of at least one ply (300, 301) of textile reinforcement elements which are oriented circumferentially,

   b) of at least two plies (310, 311) having ends free of textile reinforcement elements, which are parallel to each other within each ply and are crossed from one ply to the next, forming with the circumferential direction an angle $\alpha$, of between 5° and 35°, and

   c) radially to the outside, of an assembly (32) of at least two layers of textile reinforcement elements which are oriented relative to the circumferential direction at an angle $\beta$, of between 0° and 35°, and said two layers being obtained by winding a strip, formed of at least one element coated with rubber mix, from one edge of said layers to the other, **characterised in that**:

   d) the secant modulus of extension of an element oriented circumferentially of the ply (plies) of textile reinforcement elements (300, 301) is at least equal to 200 cN/tex,

   e) the secant modulus of extension of an element of the plies (310, 311) having free ends is at least equal to 200 cN/tex,

   f) the secant modulus of extension of an element of the layers of the assembly (32) is at most equal to 200 cN/tex, the assembly (32) of said layers of textile elements, obtained by winding a strip from one edge to the other, having an axial width $L_1$ greater than the width L of the tread (4), whereas the widths of the plies of textile reinforcement elements (300, 301) and having free ends (310, 311) formed of textile elements of high modulus of at least 200 CN/tex are less than said width L of the tread (4).

2. A tyre according to Claim 1, **characterised in that** the layers of textile elements, the secant modulus of extension $M_a$ of an element of which is at least equal to 200 cN/tex, are layers of elements of aromatic polyamide.

3. A tyre according to one of Claims 1 or 2, **characterised in that** the layers of textile elements, the secant modulus $M_a$ of which is at most equal to 200 cN/tex and which are obtained by winding from one edge to the other, are formed of cables of aliphatic polyamide.

4. A tyre according to one of Claims 1 to 3, **characterised in that** the ply (plies) (300, 301) of circumferential elements is (are) directly located radially on the carcass reinforcement (1).

5. A tyre according to Claim 4, **characterised in that** the ply (plies) (300, 301) of circumferential elements is (are) obtained by helical winding of a strip formed of at least one reinforcement element of aromatic polyamide, said element being coated with suitable rubber mix.

6. A tyre according to one of Claims 1 to 4, **characterised in that** the plies (310, 311) formed of elements oriented at the angle $\alpha$, radially above the ply (plies) (300, 301) of circumferential elements, have axial widths which differ from each other but which are greater than the width(s) of said plies (300, 301) of circumferential elements while remaining less than the width L of the tread (4).

7. A tyre according to one of Claims 2 to 4, **characterised in that** the assembly (32) of layers of elements, the modulus of which is at most equal to 200 cN/tex and which are oriented relative to the circumferential direction at an angle $\beta$, has an axial width $L_1$ such that the edges of said assembly are coupled to the carcass reinforcement (1) over a developed length l at least equal to 20 mm.

$\underline{FIG}\ 1$

FIG 2